# EUROPÄISCHE PATENTSCHRIFT

(11) **EP 2 414 706 B1**
(45) Veröffentlichungstag und Bekanntmachung des Hinweises auf die Patenterteilung: **31.07.2013**
(21) Anmeldenummer: 10712898.5
(22) Anmeldetag: 29.03.2010
(51) Int. Cl.: F16H 59/10, F16H 59/04

(54) **VORRICHTUNG ZUR ERFASSUNG DER POSITION EINES FAHRSTUFENWÄHLHEBELS UND KRAFTFAHRZEUG, DAS DAMIT AUSGESTATTET IST**
DEVICE FOR DETECTING THE POSITION OF A DRIVE POSITION SELECTING LEVER AND AUTOMOBILE EQUIPPED THEREWITH
DISPOSITIV POUR DETECTER LA POSITION D'UN LEVIER DE SÉLECTION DE GAMME DE VITESSE ET VEHICULE AUTOMOBILE AVEC UN TEL DISPOSITIV

(30) Priorität: 01.04.2009 DE 102009015883
(43) Veröffentlichungstag der Anmeldung: 08.02.2012
(73) Patentinhaber: ECS Engineered Control Systems AG, 9015 St. Gallen (CH)
(72) Erfinder: UHLENBRUCK, Falk, 35644 Hohenahr (DE)
(74) Vertreter: Müller, Eckhard
(86) Internationale Anmeldenummer: PCT/EP2010/001964
(87) Internationale Veröffentlichungsnummer: WO 2010/112186

(56) Entgegenhaltungen:
- EP-A1- 2 112 406
- WO-A1-2010/066215
- DE-A1-102004 056 800
- DE-A1-102007 026 303
- DE-A1-102008 061 336
- DE-C2- 19 749 330
- DE-U1-202007 000 210

## Beschreibung

### Technisches Gebiet

Die Erfindung betrifft eine Vorrichtung zur Erfassung der Position eines Fahrstufenwählhebels zur Wahl einer Fahrstufe bzw. Getriebeeinstellung eines Kraftfahrzeuges. Die Vorrichtung weist einen am Fahrstufenwählhebel angeordneten Signalgeber und einen zum Signalgeber beabstandet angeordneten Signalempfänger auf, wobei eine unterschiedliche relative Lage zwischen Signalgeber und Signalempfänger bei verschiedenen Fahrstufen erfassbar ist. Die Erfindung betrifft weiterhin ein Kraftfahrzeug mit einer entsprechenden Vorrichtung.

### Stand der Technik

Vorrichtungen der eingangs genannten Art sind im Stand der Technik bekannt. Die Betätigung von Automatikgetrieben sowie automatisierten Schaltgetrieben von Kraftfahrzeugen erfolgt typischerweise ohne unmittelbare mechanische Kopplung zwischen Fahrstufenwählhebel und Getriebe. Bei diesen sogenannten "Shift-by-Wire"-Systemen wird vielmehr die Position des Fahrstufenwählhebels detektiert und aus der jeweiligen Position des Fahrstufenwählhebels eine gewünschte Fahrstufe bestimmt wird, die in der Folge z.B. durch Hilfsmotoren im Getriebe eingestellt wird.

Als Sensoreinrichtungen für solche Betätigungsvorrichtungen sind beispielsweise Lichtschranken üblich, die jeder Schaltstellung des Fahrstufenwählhebels derart zugeordnet sind, dass deren Strahlengänge von dem Schalthebel selbst oder von mit dem Schalthebel bewegungsgekoppelten Abschattungsbauteilen unterbrochen werden. Verschmutzung der Lichtschrankenbauteile sowie Verschleiß der mechanischen Bauteile zur Bewegungskopplung von Schalthebel und Abschattungsbauteilen können bei solchen Betätigungsvorrichtungen zu Funktionsbeeinträchtigungen und ungünstigstenfalls zu deren Funktionsunfähigkeit führen.

Des Weiteren sind Signalgeber-Signalempfänger-Systeme bekannt, bei denen der Signalgeber an dem Fahrstufenwählhebel und der Signalempfänger beabstandet hierzu angeordnet sind, beispielsweise in einem Wählhebelgehäuse.

Eine bekannte Vorrichtung hierzu ist in der DE 10 2004 056 800 A1 an einer Schaltvorrichtung offenbart, welche eine Halterung, einen über ein Gelenk schwenkbar an der Halterung gelagerten Wählhebel sowie einer einen Signalgeber und zwei Sensoren aufweisenden Winkelmessvorrichtung aufweist, wobei die Winkelmessvorrichtung in dem Gelenk angeordnet und mit einer mit einem Kraftfahrzeuggetriebe verbundenen Steuereinrichtung elektrisch verbunden ist.

Nachteilig hieran ist, dass zur Erfassung der Position des Wählhebels wenigstens zwei Sensoren erforderlich sind, die zueinander beabstandet angeordnet sind.

Aus der DE 10 2006 044 404 A1 ist eine Vorrichtung zur Erkennung der Winkelstellung eines Wählhebels bei einem Kraftfahrzeug bekannt, wobei ebenfalls zwei Hallsensoren zur Ermittlung der Feldrichtung des magnetischen Feldes vorgesehen sind.

Aus der DE 20 2007 000 210 U1 ist darüber hinaus eine Betätigungsvorrichtung für ein Fahrzeuggetriebe bekannt mit einem Schalthebel, welcher um mindestens eine erste Schwenkachse in zumindest zwei Schaltstellungen schwenkbar ist und wobei zumindest ein erster Drehwinkelsensor zum Ermitteln der Winkelposition des Schalthebels um die erste Schwenkachse vorgesehen ist. Bei üblicherweise komplexeren zweidimensionalen Bewegungsmöglichkeiten des Schalthebels sind auch hier zwei Sensoren erforderlich, um die Stellung des Schalthebels erfassen zu können. Auch hier sind jedoch aufgrund der überlicherweise zweidimensionalen Bewegungen des Fahrstufenwählhebles in der Praxis zumindest zwei Sensoren erforderlich. Der Verkabelungs- und Rechenaufwand ist bei diesen Vorrichtungen dementsprechend ebenfalls höher.

Die DE 10 2007 026 303 A1 offenbart , dem Oberbegriff des Anspruch 1 entsprechend, eine Vorrichtung für die Erfassung und Auswertung der Gangwahl in einem Kraftfahrzeug mit einem Wählhebel, mindestens einem Magneten und mindestens einem Magnetsensorelement, das dazu geeignet ist, drei räumliche Komponenten eines Magnetfeldes zu detektieren. Der Sensor kann als Hallsensor ausgebildet sein.

### Aufgabe

Davon ausgehend liegt der Erfindung die Aufgabe zugrunde, eine Vorrichtung der eingangs genannten Art dahingehend zu verbessern, dass die Erfassung der Position eines Fahrstufenwählhebels mit großer Zuverlässigkeit, aber geringem Rechenaufwand sowie geringem Materialeinsatz möglich ist.

### Darstellung der Erfindung

Die Aufgabe wird gelöst durch eine Vorrichtung gemäß Anspruch 1 sowie durch ein Kraftfahrzeug gemäß dem nebengeordneten Anspruch 7. Vorteilhafte Ausgestaltungen der Erfindung sind Gegenstand der Unteransprüche.

Eine erfindungsgemäße Vorrichtung zur Erfassung der Position eines Fahrstufenwählhebels zur Wahl einer Getriebeeinstellung eines Kraftfahrzeuges weist einen am Fahrstufenwählhebel angeordneten Signalgeber und einen zum Signalgeber beabstandet angeordneten Signalempfänger auf. Die relative Lage zwischen Signalgeber und Signalempfänger ist bei verschiedenen wählbaren Fahrstufen unterschiedlich und durch Signalgeber und Signalempfänger erfassbar.

"Fahrstufenwählhebel" im Sinne der vorliegenden Erfindung ist als jede Vorrichtung zu verstehen, die manuell betätigbar ist, und mit deren Hilfe wenigstens zwei unterschiedliche Fahrstufen eines Getriebes des Kraftfahrzeuges wählbar sind. Dabei spielt die Art des Getriebes für die Erfindung keine Rolle. Das Getriebe kann ein Automatikgetriebe oder ein automatisiertes Schaltgetriebe sein, ebenso aber auch ein gewöhnliches Schaltgetriebe. Eine erfindungsgemäße Vorrichtung kann hierbei zum Beispiel zur Schaltanzeige dienen.

Erfindungsgemäß ist vorgesehen, dass der Signalempfänger zur Erfassung der relativen Lage des Signalgebers in drei Dimensionen ausgebildet ist. Mit Hilfe der Erfindung ist es somit möglich, mit nur einem einzigen Signalempfänger die Position eines Fahrstufenwählhebels vollständig zu erfassen. Die Verwendung zweier Signalempfänger und der damit verbundene erhöhte Rechenaufwand erübrigen sich. Die erfindungsgemäße Vorrichtung erleichtert darüber hinaus die Konstruktion einer entsprechenden Wählhebelvorrichtung, da nur ein Signalempfänger positioniert werden muss und nicht mehrere.

Die relative Lage des Signalgebers zum Signalempfänger in drei Dimensionen kann auf unterschiedliche Weisen festgestellt werden. So ist zunächst denkbar, die drei Komponenten des Vektors zwischen Signalempfänger und Signalgeber aufzunehmen. Darüber hinaus kann auch eine Erfassung von zwei Vektorkomponenten sowie des Betrages des Abstandsvektors ausreichend sein. Eine dritte Möglichkeit zur Bestimmung der drei Dimensionen ist die Bestimmung dreier Winkel eines von dem Signalgeber auf den Signalempfänger treffenden Sensorsignals.

Die Auswertung des Signals und damit die Bestimmung der relativen Lage des Signalgebers zum Signalempfänger muss nicht unmittelbar im Signalempfänger vorgenommen werden.

Desweiteren ist vorgesehen, dass der Signalgeber als Magnet und der Signalempfänger als dreiachsige Hallsensorik ausgebildet ist. Die dreiachsige Hallsensorik kann dann gemäß einer Weiterbildung so ausgebildet sein, dass sie die Richtung und/oder den Betrag des von dem Magneten ausgehenden und in der dreiachsigen Hallsensorik eintreffenden Magnetfeldes auswertet. Die Hallsensorik ist vorzugsweise als sogenannter 3D-Hallsensor ausgebildet.

In aller Regel wird die Auswertung des Richtungsvektors des Magnetfeldes der dreiachsigen Hallsensorik ausreichen, da der Fahrstufenwählhebel üblicherweise in einer Kulisse geführt ist und somit definierte Positionen einnehmen kann, welche sich durch ein charakteristisches Magnetfeld des Magneten in der dreiachsigen Hallsensorik auszeichnen.

Wenn der Signalempfänger weiterhin fahrzeugfest angeordnet ist, lässt sich die Energieversorgung des Signalempfängers sowie das Abgreifen des Signals erleichtern. Der Signalempfänger kann beispielsweise in einem Schaltgehäuse des Fahrstufenwählhebels angeordnet sein.

Erfindungsgemäß ist eine Kugelgelenkführung des Fahrstufenwählhebels vorgesehen, wobei der Signalgeber dann bevorzugt an einer Kugel des Kugelgelenks angeordnet ist. Durch Schwenken des Fahrstufenwählhebels rund um das Kugelgelenk wird der Signalgeber zusammen mit dem Fahrstufenwählhebel verschwenkt. Die Anordnung an der Kugel des Kugelgelenks erlaubt eine besonders unkomplizierte Anordnung des Signalempfängers.

Ein weiterer Vorteil lässt sich bei einer Kugelgelenkausführung erreichen, wenn bei Verwendung eines Magneten als Signalgeber eine Nord-Süd-Achse des Magneten nicht zu bzw. durch einen Kugelmittelpunkt der Kugel verläuft. Auf diese Weise lässt sich eine größere Änderung des Magnetfeldes in dem dreiachsigen Hallsensor erzielen und die Auswertegenauigkeit verbessern.

Ein weiterer Vorteil ergibt sich, wenn der Signalgeber innerhalb einer durch den Radius der Kugel des Kugelgelenks gebildeten Kugelfläche angeordnet ist. Dadurch lässt sich eine bessere Führung des Fahrstufenwählhebels erreichen als bei anderen Anordnungen des Signalgebers, beispielsweise auf der Kugelfläche der Kugel des Kugelgelenks oder sogar außerhalb der Kugelfläche des Kugelgelenks. Die Führung des Fahrstufenwählhebels in einer Kugelpfanne wird dadurch nicht gestört.

Bevorzugt ist der Signalgeber im Inneren der Kugel angeordnet. Dies kann beispielsweise durch eine spritzgegossenen Kugel, in der der Signalgeber beim Spritzen eingebracht wurde, erreicht werden oder auch durch Verwendung einer hohlen oder teilweise hohlen Kugel, in deren Inneren der Signalgeber angeordnet ist.

Alternativ hierzu kann vorgesehen sein, dass die Kugel einen Kugelausschnitt aufweist, in welchem der Signalgeber angeordnet ist. Die Kugel ist damit keine vollständige Kugel, sondern weist einen Rücksprung auf, in dem der Signalgeber angeordnet ist. Der Rücksprung kann so groß sein, dass der Signalgeber die Kugelfläche ergänzt oder kann alternativ dazu weiter ausgeschnitten sein.

Bevorzugt ist weiterhin eine mit dem Signalempfänger verbundene Auswerteeinheit zur Auswertung des Signals des Signalempfängers vorgesehen. Dies erleichtert die Auswertung des Sensorsignals.

Ein erster unabhängiger Gegenstand der Erfindung betrifft ein Kraftfahrzeug mit einer Vorrichtung gemäß der zuvor beschriebenen Erfindung.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

### Kurze Beschreibung der Figuren

Die Erfindung wird anhand zweier Ausführungsbeispiele erläutert. Dabei zeigen schematisch:
- Fig. 1: einen Schalthebel mit einer erfindungsgemäßen Vorrichtung in perspektivischer Darstellung gemäß einer ersten, nicht zur Erfindung gehörenden, Variante;
- Fig. 2: eine Schnittdarstellung eines Schnittes entlang der Schnittlinie A-A durch die Vorrichtung aus Fig. 1;
- Fig. 3: ein Fahrstufenwählhebel mit einer erfindungsgemäßen Vorrichtung gemäß einer zweiten Variante in perspektivischer Darstellung;
- Fig. 4: eine Draufsicht auf die Vorrichtung aus Fig. 3;
- Fig. 5: einen Schnitt durch einen Fahrstufenwählhebel gemäß der zweiten Variante entlang der Schnittlinie A-A gemäß Fig. 4 sowie
- Fig. 6: einen Schnitt durch einen erfindungsgemäßen Fahrstufenwählhebel gemäß der zweiten Ausführungsform entlang der Schnittlinie B-B aus Fig. 5.

### Ausführungsbeispiele

Nachfolgend werden zwei unterschiedliche Ausführungsbeispiele beschrieben, wobei im zweiten die Erfindung beschrieben ist. Zur Vereinfachung werden gleiche oder gleichwirkende Bauteile in beiden Ausführungsbeispielen mit denselben Bezugszeichen bezeichnet.

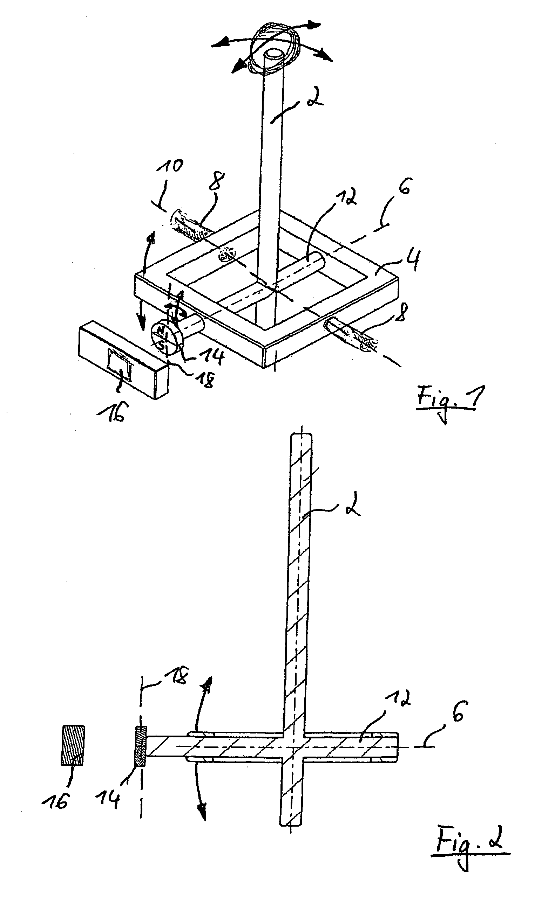

Fig. 1 zeigt eine schematische dreidimensionale Ansicht einer Fahrstufenwählvorrichtung mit einer Vorrichtung zur Erfassung der Position eines Fahrstufenwählhebels 2.

Der Fahrstufenwählhebel 2 ist in einer nicht dargestellten Kulisse geführt und erlaubt die Wahl unterschiedlicher Fahrstufen, welche in der Kulisse in zwei Dimensionen angeordnet sind, beispielsweise in einer üblichen H-Anordnung der unterschiedlichen Fahrstufen. Die Kulisse kann beispielsweise auch eine sequenzielle Anordnung der unterschiedlichen Fahrstufen vorsehen und eine zweite Fahrstufenwähl- bzw. Schaltgasse aufweisen.

Der Fahrstufenwählhebel 2 ist zweifach schwenkbar in einem Lagerrahmen 4 gelagert. Eine erste Schwenkachse 6 ist durch ein Verschwenken des Fahrstufenwählhebels 2 relativ zum Lagerrahmen 4 bestimmt. Durch eine Lagerung des Lagerrahmens 4 mit Hilfe von Lagerbolzen 8 in einem nicht dargestellten Gehäuse der Fahrstufenwählanordnung wird eine zweite Schwenkachse 10 bereitgestellt.

Zum Verschwenken des Fahrstufenwählhebels 2 um die erste Schwenkachse 6 ist im Inneren des Lagerrahmens 4 eine Schwenkwelle 12 vorgesehen, die drehbar in dem Lagerrahmen 4 gelagert ist. Auf der sichtbaren Vorderseite des Lagerrahmens 4 ist die Schwenkwelle 12 durch den Lagerrahmen 4 hindurchgeführt.

An einer Stirnseite der Lagerwelle 2 ist ein Magnet 14 befestigt. Dem Magneten 14 gegenüberliegend ist ein Hallsensor 16 angeordnet, der eine dreidimensionale Messung des Magnetfeldes des Magneten 14 ermöglicht. Hier handelt es sich um einen 3D-Hallsensor.

Eine Nord-Süd-Achse 18 des Magneten 14 ist paarweise senkrecht zu den Schwenkachsen 6, 10 ausgerichtet. Ein Bewegen des Fahrstufenwählhebels 2 zum Wählen einer Fahrstufe, erfordert ein Schwenken des Fahrstufenwählhebels 2 um wenigstens eine der beiden Schwenkachsen 6, 10. Aufgrund der Kopplung zwischen Magnet 14 und Schwenkwelle 12 wird der Magnet 14 bei einem Schwenken des Fahrstufenwählhebels 2 um die erste Schwenkachse 6 relativ zu dem Hallsensor 16 gedreht. Das von dem Magneten 14 ausgehende Magnetfeld dreht sich zusammen mit dem Magneten 14. Der Hallsensor 16 registriert diese Änderung des Magnetfeldes.

Die Messung kann statisch erfolgen oder dynamisch. Eine dynamische Messung, also eine Messung der Veränderung des Magnetfeldes mit der Zeit, ermöglicht eine Kausalitätsprüfung und somit eine Erhöhung der Zuverlässigkeit der Positionsbestimmung.

Ein Schwenken des Fahrstufenwählhebels 2 um die zweite Schwenkachse 10 führt dazu, dass sich der Abstand zwischen Magnet 14 und Hallsensor 16 verändert. Dies hat einerseits Auswirkungen auf die absolute Stärke des Magnetfeldes des Magneten 14 im Bereich des Hallsensors 16 und im geringeren Maße Einfluss auf den Richtungsvektor des Magnetfeldes des Magneten 14 im Bereich des Hallsensors 16.

Bei komplexeren Bewegungen des Fahrstufenwählhebels 2 wird dieser sowohl um die erste Schwenkachse 6 als auch um die zweite Schwenkachse 10 geschwenkt. Damit wird das Magnetfeld des Magneten 14 relativ zum Hallsensor 16 also gedreht und abgeschwächt. Aus der Stärke des Magnetfeldes sowie der Richtung des Magnetfeldes lässt sich die Lage des Fahrstufenwählhebels 2 eindeutig bestimmen.

Alternativ zur Bestimmung der Stärke des Magnetfeldes sowie zweier Komponenten des Richtungsvektors können auch alle drei Komponenten des Richtungsvektors des Magnetfeldes des Magneten 14 im Bereich des Hallsensors 16 gemessen werden, wobei sich eine Messung der Stärke des Magnetfeldes des Magneten 14 erübrigt.

Fig. 2 zeigt einen Schnitt durch die Anordnung gemäß Fig. 1, wobei der Schnitt senkrecht zur zweiten Schwenkachse 10 auf der Höhe der ersten Schwenkachse 6 angeordnet ist. Ein Schwenken des Fahrstufenwählhebels 2 um die zweite Schwenkachse 10 führt dazu, dass der Magnet 14 seinen Abstand zum Hallsensor 16 erheblich vergrößert.

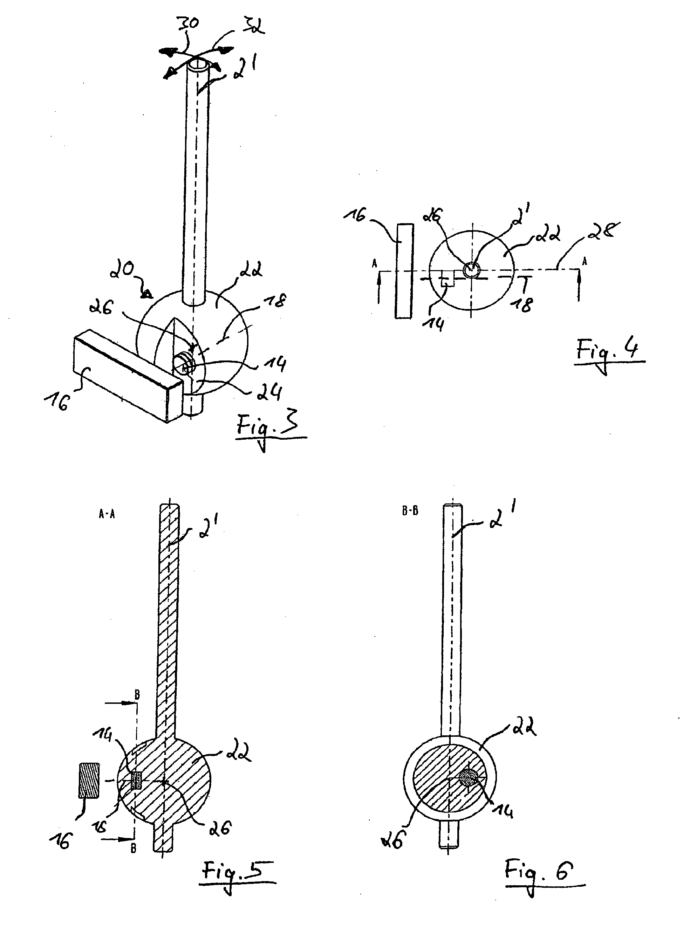

Die Figuren 3 bis 6 zeigen eine zweite Ausführungsform gemäβ der Erfindung. Fig. 3 zeigt eine schematische perspektivische Darstellung einer Fahrstufenwählhebelanordnung mit einem Fahrstufenwählhebel 2', der über ein Kugelgelenk 20 geführt ist. Das Kugelgelenk 20 weist eine Kugel 22 auf, die in einer nicht dargestellten Kugelpfanne gelagert ist.

Ein Magnet 14 ist in einem Kugelausschnitt 24 angeordnet, wobei eine Nord-Süd-Achse 18 des Magneten 14 so ausgerichtet ist, dass sie nicht durch einen Mittelpunkt 26 der Kugel 22 verläuft. Dem Magneten 14 benachbart ist ein Hallsensor 16 zu einem Gehäuse der Fahrstufenwählhebelanordnung fest angeordnet, wobei der Hallsensor 16, wie schon bei der zuvor beschriebenen Ausführungsform zur Erfassung dreidimensionalen relativen Lage des Magneten 14 zum Hallsensor 16 ausgebildet ist. Auch in der zweiten Ausführungsform können auf die zuvor beschriebenen Techniken zur Messung der relativen Lage des Fahrstufenwählhebels 2' zurückgegriffen werden.

Ein Anordnen des Magneten 14 dergestalt, dass seine Nord-Süd-Achse 18 nicht durch den Mittelpunkt 26 der Kugel 22 verläuft, lässt sich zum Beispiel, wie in Fig. 4 dargestellt, dadurch erreichen, dass der Magnet 14, bezogen auf eine Achse 28, die durch den Kugelmittelpunkt verläuft, außermittig, jedoch mit der Nord-Süd-Achse 18 parallel zu der Achse 28 verläuft. In dem zweiten Ausführungsbeispiel ist die Achse 28 so gelegt, dass sie die kürzeste Verbindung zwischen Kugel 22 und Hallsensor 16 beinhaltet.

Die Anordnung des Magneten 14 in der Kugel ist in den Figuren 5 und 6 weiter verdeutlicht, die jeweils Schnitte entlang der Schnittlinien A-A aus Fig. 4 (Fig. 5) bzw. B-B aus Fig. 5 (Fig. 6) zeigen.

Durch die exzentrische Anordnung des Magneten 14 wird erreicht, dass der Magnet 14 beim Bewegen des Fahrstufenwählhebels 2' relativ zum Hallsensor 16 einen größeren Hub erfährt. Beim Schwenken des Fahrstufenwählhebels 2' in einer ersten Richtung 30 wird der Magnet 14 auf einer Kreisbahn um den Hallsensor 16 herum bewegt. Ein Bewegen des Fahrstufenwählhebels 2' um eine zweite Schwenkrichtung 32 führt zu einer Veränderung des relative Abstandes zwischen Magnet 14 und Hallsensor 16 sowie um ein Verkippen der Nord-Süd-Achse 18 des Magneten 14 relativ zum Hallsensor 16.

Auch die zweite Ausführungsform ermöglicht unterschiedliche Arten zur Erfassung der relativen Position zwischen Magnet 14 und Hallsensor 16, da sowohl die Stärke des Magnetfeldes des Magneten 14 im Bereich des Hallsensors 16 sich beim Verschwenken ändert als auch die Richtung des Magnetfeldvektors des Magnetfeldes.

### Bezugszeichenliste

- 2, 2': Fahrstufenwählhebel
- 4: Lagerrahmen
- 6: erste Schwenkachse
- 8: Lagerbolzen
- 10: zweite Schwenkachse
- 12: Schwenkwelle
- 14: Signalgeber, Magnet
- 16: Hallsensor
- 18: Nord-Süd-Achse
- 20: Kugelgelenk
- 22: Kugel
- 24: Kugelausschnitt
- 26: Kugelmittelpunkt
- 28: Achse
- 30: Schwenkrichtung
- 32: Schwenkrichtung

## Patentansprüche

1. Vorrichtung zur Erfassung der Position eines Fahrstufenwählhebels (2, 2') zur Wahl einer Getriebeeinstellung eines Kraftfahrzeuges, mit einem am Fahrstufenwählhebel (2, 2') angeordneten Signalgeber (14) und einem zum Signalgeber (14) beabstandet angeordneten Signalempfänger (16) auf, wobei die relative Lage zwischen Signalgeber (14) und Signalempfänger (16) bei verschiedenen wählbaren Fahrstufen unterschiedlich ist, wobei der Signalempfänger (16) zur Erfassung der relativen Lage des Signalgebers (14) zum Signalempfänger (16) in drei Dimensionen ausgebildet ist, wobei der Signalgeber als Magnet (14) und der Signalempfänger als dreiachsige Hallsensorik (16) ausgebildet sind, wobei der Fahrstufenwählhebel (2') ein Kugelgelenk (20) aufweist, wobei der Signalgeber (14) an oder in einer Kugel (22) des Kugelgelenkes (20) angeordnet ist, und wobei eine Nord-Süd-Achse (18) des Magneten (14) nicht durch den Kugelmittelpunkt (26) verläuft, **dadurch gekennzeichnet, dass** der Magnet (14) bezogen auf eine Achse (28), die die kürzeste Verbindung zwischen der Kugel (22) und dem Hallsensor (16) beinhaltet und durch den Kugelmittelpunkt (26), jedoch parallel zu der Nord-Süd-Achse (18) des Magneten (14) verläuft, außermittig angeordnet ist.

2. Vorrichtung nach Anspruch 1, **dadurch gekennzeichnet, dass** der Signalempfänger (16) fahrzeugfest angeordnet ist.

3. Vorrichtung nach Anspruch 1 oder 2, **dadurch gekennzeichnet, dass** der Signalgeber (14) innerhalb eines durch den Radius der Kugel (22) gebildeten Kugelfläche angeordnet ist.

4. Vorrichtung nach einem der Ansprüche 1 bis 3, **dadurch gekennzeichnet, dass** der Signalgeber (14) im Inneren der Kugel (22) angeordnet ist.

5. Vorrichtung nach Anspruch 3, **dadurch gekennzeichnet, dass** die Kugel (22) einen Kugelausschnitt (24) aufweist, in dem der Signalgeber (14) angeordnet ist.

6. Vorrichtung nach einem der vorangegangenen Ansprüche, **dadurch gekennzeichnet, dass** eine mit dem Signalempfänger (16) verbundene Auswerteeinheit (28) zur Auswertung des Signals des Signalempfängers (16) vorgesehen ist.

7. Kraftfahrzeug, aufweisend eine Vorrichtung nach einem der vorangegangenen Ansprüche.

## Claims

1. Device for detecting the position of a drive position selecting lever (2, 2') for selecting a transmission setting of a motor vehicle, having a signal transmitter (14) which is arranged on the drive position selecting lever (2, 2'), and a signal receiver (16) which is arranged at a distance from the signal transmitter (14), wherein the relative position between the signal transmitter (14) and the signal receiver (16) is different in the case of different selectable drive positions, wherein the signal receiver (16) is designed to detect the relative position of the signal transmitter (14) with respect to the signal receiver (16) in three dimensions, wherein the signal transmitter is embodied as a magnet (14), and the signal receiver is embodied as a three-axis Hall sensor system (16), wherein the drive position selecting lever (2') has a ball-and-socket joint (20), wherein the signal transmitter (14) is arranged on or in a ball (22) of the ball-and-socket joint (20), and wherein a north-south axis (18) of the magnet (14) does not run through the ball centre point (26), **characterized in that** the magnet (14) is arranged off-centre with respect to an axis (28) which includes the shortest connection between the ball (22) and the Hall sensor (16) and runs through the ball centre point (26), but parallel to the north-south axis (18) of the magnet (14).

2. Device according to Claim 1, **characterized in that** the signal receiver (16) is arranged fixed to the vehicle.

3. Device according to Claim 1 or 2, **characterized in that** the signal transmitter (14) is arranged within a spherical surface formed by the radius of the ball (22).

4. Device according to one of Claims 1 to 3, **characterized in that** the signal transmitter (14) is arranged in the interior of the ball (22).

5. Device according to Claim 3, **characterized in that** the ball (22) has a ball cutout (24) in which the signal transmitter (14) is arranged.

6. Device according to one of the preceding claims, **characterized in that** an evaluation unit (28) which is connected to the signal receiver (16) is provided for evaluating the signal of the signal receiver (16).

7. Motor vehicle, having a device according to one of the preceding claims.

## Revendications

1. Dispositif de saisie de la position d'un levier (2, 2') de sélection de rapports de transmission destiné à sélectionner une position du levier de vitesse d'un véhicule automobile, le dispositif présentant
un émetteur (14) de signaux disposé sur le levier (2, 2') de sélection de rapports de transmission et un récepteur (16) de signaux disposé à distance de l'émetteur (14) de signaux,
la position de l'émetteur (14) de signaux par rapport au récepteur (16) de signaux étant différente pour les différents rapports de transmission sélectionnables,
le récepteur (16) de signaux étant réalisé en trois dimensions pour lui permettre de saisir la position de l'émetteur (14) de signaux par rapport au récepteur (16) de signaux,
l'émetteur de signaux étant configuré comme aimant (14) et le récepteur de signaux comme ensemble triaxial (16) de détecteurs de Hall,
le levier (2') de sélection de rapports de transmission présentant une articulation sphérique (20),
l'émetteur (14) de signaux étant disposé sur ou dans une sphère (22) de l'articulation sphérique (20) et
un axe nord-sud (18) de l'aimant (14) ne passant pas par le centre (26) de la sphère,
**caractérisé en ce que**
l'aimant (14) est disposé à l'extérieur sur un axe (28) qui contient la plus courte liaison entre la sphère (22) et le détecteur de Hall (16) et qui passe par le centre (26) de la sphère mais s'étend parallèlement à l'axe nord-sur (18) de l'aimant (14).

2. Dispositif selon la revendication 1, **caractérisé en ce que** le récepteur (16) de signaux est disposé fixement sur le véhicule.

3. Dispositif selon les revendications 1 ou 2, **caractérisé en ce que** l'émetteur (14) de signaux est disposé à l'intérieur d'une surface sphérique formée par le rayon de la sphère (22).

4. Dispositif selon l'une des revendications 1 à 3, **caractérisé en ce que** l'émetteur (14) de signaux est disposé à l'intérieur de la sphère (22).

5. Dispositif selon la revendication 3, **caractérisé en ce que** la sphère (22) présente un segment sphérique (24) dans lequel est disposé l'émetteur (14) de signaux.

6. Dispositif selon l'une des revendications précédentes, **caractérisé en ce qu'**une unité d'évaluation (28) raccordée au récepteur (16) de signaux est prévue pour évaluer le signal du récepteur (16) de signaux.

7. Véhicule automobile présentant un dispositif selon l'une des revendications précédentes.
